# EUROPEAN PATENT SPECIFICATION

(11) **EP 4 276 333 B1**
(45) Date of publication and mention of the grant of the patent: **14.01.2026**
(21) Application number: 23164042.6
(22) Date of filing: 24.03.2023
(51) Int. Cl.: F16H 57/04, F01M 11/04, F16L 37/44, B25B 27/00

(54) **SERVICE TOOL FOR COUPLING TO A SERVICE PORT RECEIVER ASSOCIATED WITH A GEARBOX**
SERVICEWERKZEUG ZUR KOPPLUNG AN EINEN SERVICEPORTEMPFÄNGER IM ZUSAMMENHANG MIT EINEM GETRIEBE
OUTIL DE SERVICE POUR LE COUPLAGE À UN RÉCEPTEUR DE PORT DE SERVICE ASSOCIÉ À UNE BOÎTE DE VITESSES

(30) Priority: 11.05.2022 AU 2022901252
(43) Date of publication of application: 15.11.2023
(73) Proprietor: Walnab Pty Ltd, Gateshead, NSW 2290 (AU)
(72) Inventor: FRETWELLL, Mark, Gateshead, NSW, 2290 (AU)
(74) Representative: Wynne-Jones IP Limited

(56) References cited:
- US-A- 2 506 722
- US-B1- 10 094 514
- US-B1- 7 028 711

## Description

### Technical Field

The present invention is broadly directed to a service tool for coupling to a service port receiver associated with a gearbox. The invention is also generally directed to in combination a service tool and service port receiver.

### Background of Invention

Generally, gearboxes are fitted with one or two threaded plugs which must be removed from their respective ports for the removal of waste oil under gravity and for the refilling of replacement oil. This is a typical approach and practice for oil changes on all gearboxes. Although this style of plug is inexpensive and effective in sealing the associated port, the oil change process is often messy and slow as it relies on gravity to perform the effort to remove the oil. Furthermore, typically the oil must be collected in a reservoir which may or may not be easy to place under the port. This leads to waste oil running over the associated machinery, and potentially onto the floor presenting a slip hazard. In a crude attempt to avoid these problems operators have been known to directly screw a standard fluid coupling receiver into a wheel hub, even with a mismatched thread. The exposed receiver which remains with the wheel hub during normal operation poses a risk of impact and possible dislodgement of the standard receiver. This dislodgement or other damage to the receiver exposing the wheel hub port results in oil loss which during motion is likely to result in a very expensive and premature failure of the associated gearbox.

US 10094514 (SAMMATARO STEPHEN R [US] ET AL) relates to a drain plug assembly includes a valve body, a removable closure, a poppet, and a resilient member. The valve body has a central bore extending between an inlet and an axially opposite outlet. The bore has a seat arranged between the inlet and outlet. The closure has an unseated and seated position, the closure cooperating with the seat to form an outer seal in the seated position. The poppet is arranged in the bore on a side of the seat opposite the outlet and has open and closed positions, the poppet cooperating with the seat to form an interior seal in the closed position. The resilient member is arranged between the valve body and the poppet for fluidly isolating the inlet from the outlet irrespective of the closure position. A snap ring and locking spline arrange are incorporated to prevent removal of the valve body during service.

US 7028711 (SCOTT GREG F [US]) relates to a fluid coupling for connecting a hose to a port includes an internal body slidably supported in an external body bore of an external body. The internal body includes valve bore. A stem, located in the valve bore, includes first and second stem seals, and a stem bore in fluid communication with a hose fitting and an outer surface of the stem between the seals. The stem is movable between valve open and closed positions by moving a valve handle. A rotation limiting member coupled to the stem and slidably coupled to the external body limits the rotation of the stem. A locking sleeve coupled to the external body moves between a secure position and a release position. The locking sleeve interferes with the valve handle position when the locking sleeve is in the release position to prevent opening the valve when not connected to the port.

US 2506722 (KUEHN WILLIAM J ET AL] relates to a drain valve comprising an externally threaded tubular housing adapted to be received in a cooperating member and having a bore extending axially therethrough, said housing at its outer end having a non-circular head formed with opposed wrench engaging flats, said housing being formed with a valve seat at its inner end, a valve member axially movable in said bore projecting through the outer end of said housing and carrying a valve for cooperation with said seat, and a radially extending cross-bar secured to the projecting outer end of said valve member, said cross-bar having an axially inwardly extending end portion terminating in a radially inturned end, said inturned end being spaced radially from said valve a distance greater than the radial dimension of said head at its points of minimum diameter and less than the radial dimension of said head at its points of maximum diameter whereby said inturned end may be moved axially past the portions of said head of minimum diameter and engage under the portions of maximum diameter, when turned, to lock the valve in unseated position, said cross-bar and inturned end being narrower than the portions of minimum diameter of said head so as to expose at least two opposite wrench engaging flats when said valve is in either open or closed position.

### Summary of Invention

According to a first aspect of the present invention there is provided a service tool adapted for connection to a fluid conduit and for coupling to a service port receiver associated with a gearbox, said tool comprising:
a coupling arrangement adapted to releasably couple to the service port receiver, the coupling arrangement configured for rotational movement about the service port receiver between (a) a released position where the coupling arrangement is released from the service port receiver permitting axial movement of said coupling arrangement relative to said service port receiver, and (b) an engaged position where the coupling arrangement engages the service port receiver preventing axial movement of said coupling arrangement relative to said service port receiver;
a locking actuator operatively coupled to the coupling arrangement and arranged for movement between (i) a locked position where the locking actuator releasably engages the service port receiver preventing rotation of the coupling arrangement thereby retaining it in the engaged position, and (ii) an unlocked position where the locking actuator disengages the service port receiver permitting rotation of the coupling arrangement to the released position for its release from said service port receiver;
a plunger actuator adapted for connection to the fluid conduit, said plunger actuator being slidably coupled to the coupling arrangement for movement between an open position and a closed position where in the open position, with the coupling arrangement in the engaged position and the locking actuator in the locked position, the plunger actuator is adapted to contact a check valve of the service port receiver and open it thereby permitting fluid flow between the gearbox and the fluid conduit via a fluid pathway formed at least in part by the plunger actuator;
the plunger actuator including a plunger member arranged for sliding movement within the coupling arrangement between the open and closed positions, the plunger member partly defining the fluid pathway;
the coupling arrangement including a coupling body surrounding at least part of the plunger actuator;
characterised in that:
   said movement of the locking actuator between the locked position and the unlocked position is axial movement; and
   the coupling arrangement includes a key member having an operative end radially projecting inward of the coupling body for guided movement along an axially directed keyway formed in the plunger member of the plunger actuator during movement of said plunger actuator between its open and closed positions.

Preferably the locking actuator includes an elongated locking member adapted for axial movement into and out of engagement with a corresponding cavity of the service port receiver during movement of the locking actuator between its locked and unlocked positions, respectively.

Preferably the plunger member of the plunger actuator includes a circumferential groove formed continuous with the axially directed keyway and arranged with the plunger actuator in the open position for guided rotational movement of the plunger actuator within the coupling body toward a retained position preventing axial movement of the plunger actuator and thus retaining the check valve of the service port receiver in the open position. More preferably the circumferential groove extends only partly around the tubular actuator and includes an abutment for abutment with the operative end of the key member with the plunger actuator in the retained position whereupon the locking member of the locking actuator being engaged with the service port receiver limits further rotation of the plunger actuator relative to the service port receiver.

Preferably the service tool also comprises biasing means operatively coupled to the locking actuator for axial biasing of the locking member toward the locked position. More preferably the biasing means includes a compression spring located between the locking actuator and the plunger actuator, said spring acting against the plunger actuator wherein axial movement of the plunger actuator relative to the coupling arrangement is permitted under the guided interaction between the key member and the axially directed keyway under the influence of the spring.

Preferably the plunger member of the plunger actuator is a tubular member of a blind configuration including a plurality of radially-directed fluid apertures at its blind end, said apertures being exposed on opening of the check valve to permit said fluid flow via the fluid pathway.

Preferably the coupling arrangement includes a coupling head having an oval-shaped opening formed partly by opposing and internally directed flanges adapted on part rotation of the coupling head about the service port receiver to interlock with a corresponding rebate on said service port receiver.

According to a second aspect of the invention there is provided in combination a service tool and service port receiver comprising:
(1) a service port receiver adapted for connection to a service port associated with a gearbox;
(2) a service tool adapted for connection to a fluid conduit, said tool comprising:
   a coupling arrangement for releasable coupling with the service port receiver, said arrangement configured for rotational movement about the service port receiver between (a) a released position where the coupling arrangement is released from the service port receiver permitting axial movement of said coupling arrangement relative to said service port receiver, and (b) an engaged position where the coupling arrangement engages the service port receiver preventing axial movement of said coupling arrangement relative to said service port receiver,
   a locking actuator operatively coupled to the coupling arrangement and arranged for movement between (i) a locked position where the locking actuator releasably engages the service port receiver preventing rotation of the coupling arrangement thereby retaining it in the engaged position, and (ii) an unlocked position where the locking actuator disengages the service port receiver permitting rotation of the coupling arrangement to the released position for its release from said service port receiver;
   a plunger actuator adapted for connection to the fluid conduit, said plunger actuator being slidably coupled to the coupling arrangement for movement between an open position and a closed position where in the open position, with the coupling arrangement in the engaged position and the locking actuator in the locked position, the plunger actuator is adapted to contact a check valve of the service port receiver and open it thereby permitting fluid flow between the gearbox and the fluid conduit via a fluid pathway formed at least in part by the plunger actuator;
   the plunger actuator including a plunger member arranged for sliding movement within the coupling arrangement between the open and closed positions, the plunger member partly defining the fluid pathway;
   the coupling arrangement including a coupling body surrounding at least part of the plunger actuator;
   characterised in that:
      said movement of the locking actuator between the locked position and the unlocked position is axial movement; and
      the coupling arrangement includes a key member having an operative end radially projecting inward of the coupling body for guided movement along an axially directed keyway formed in the plunger member of the plunger actuator during movement of said plunger actuator between its open and closed positions.

### Brief Description of Drawings

In order to achieve a better understanding of the nature of the present invention a preferred embodiment of a service tool for coupling to a service port receiver associated with a gearbox will now be described, by way of example only, with reference to the accompanying drawings in which:
Figure 1 is a sectional view of a preferred embodiment of a service tool for coupling to a service port receiver associated with a gearbox, said tool and receiver being constructed and operating according to both aspect of the present invention;
Figures 2A to 2C are half cutaway and front views of the service tool and service port receiver of the preferred embodiment of figure 1;
Figure 3A is a quarter cutaway view shown in perspective of the service tool of the preferred embodiment of figure 1 according to the first aspect of the invention;
Figure 3B is a front view of the service tool of the embodiment of figure 1 according to the first aspect of the invention;
Figures 4A and 4B are quarter cutaway and front views of the service port receiver of the preferred embodiment of figure 1 according to the second aspect of the invention;
Figure 5 is a sectional view of the service tool and service port receiver of the preferred embodiment of both aspects of the invention shown with the service tool in its released position prior to coupling to the service port receiver;
Figure 6 is a sectional view of the service tool and service port receiver of the preferred embodiment of figure 5 depicted in an engaged and unlocked position relative to the service port receiver;
Figure 7 is a sectional view of the service tool and service port receiver of the preferred embodiment of figures 5 and 6 shown in an engaged and locked position relative to the service port receiver and prior to opening of the check valve of said receiver;
Figure 8 is a sectional view of the service tool and service port receiver of the preferred embodiment of figures 5 to 7 seen in the engaged and locked positions relative to the service port receiver with the plunger actuator moved into its open position for opening of the check valve of said receiver;
Figure 9 is sectional view of the service tool and service port receiver of the preferred embodiment of figures 5 to 8 shown in its engaged and locked positions with the locking actuator in the locked position retaining the check valve of said receiver in the open position;
Figure 10 is a sectional view of the service tool and service port receiver of the preferred embodiment of figures 5 to 9 returned to its engaged and unlocked positions where the check valve of said receiver is closed.

### Detailed Description

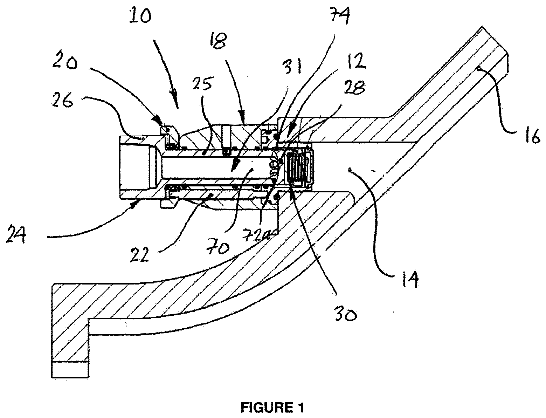

As seen in figure 1 there is a service tool 10 of a preferred embodiment of a first aspect of the present invention. In a second aspect of the invention the service tool 10 is releasably coupled to a service port receiver 12 connected to a service port 14 associated with a gearbox (not shown). In this example the gearbox is associated with a wheel hub 16 in which the service port 14 is located. It is to be understood that the service tool 10 of this embodiment is adapted for connection to a fluid conduit (not shown) for fluid transfer with the gearbox, typically engine oil or other hydrocarbons. The service tool 10 thus lends itself to oil changes for waste oil removal and refilling of the gearbox.

The service tool 10 of this embodiment broadly comprises:
1. a coupling arrangement 18 for releasably coupling to the service port receiver 12, the coupling arrangement 18 configured for rotational movement about said service port receiver 12 between a released position and an engaged position;
2. a locking actuator 20 operatively coupled to the coupling arrangement 18 and arranged for axial movement between a locked position and an unlocked position relative to the service port receiver 12;
3. a plunger actuator 24 adapted for connection to the fluid conduit, the plunger actuator 24 slidably coupled to the coupling arrangement 18 for movement between open and closed positions where in the open position, with the coupling arrangement 18 in the engaged position and the locking actuator 20 in the locked position, the plunger actuator 24 is adapted to contact a check valve 30 of the service port receiver 12 and open it thereby permitting fluid flow between the gearbox and the fluid conduit via a fluid pathway 31 formed at least in part by the plunger actuator 24.

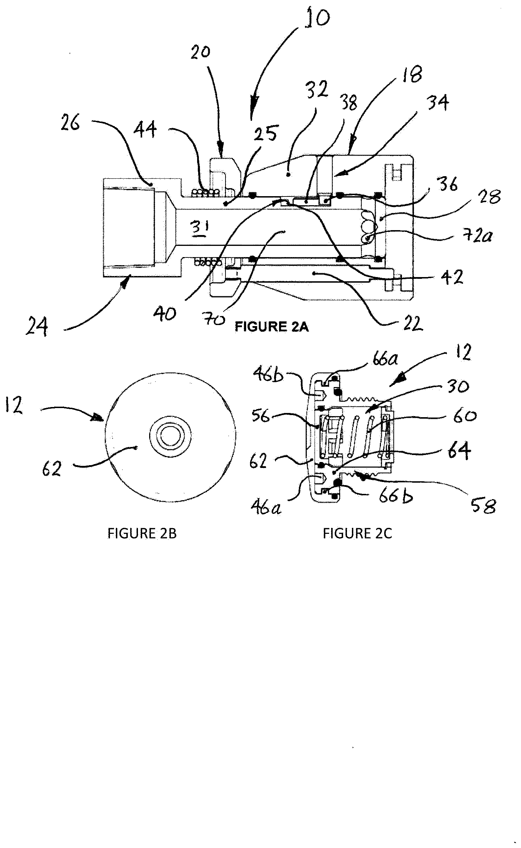

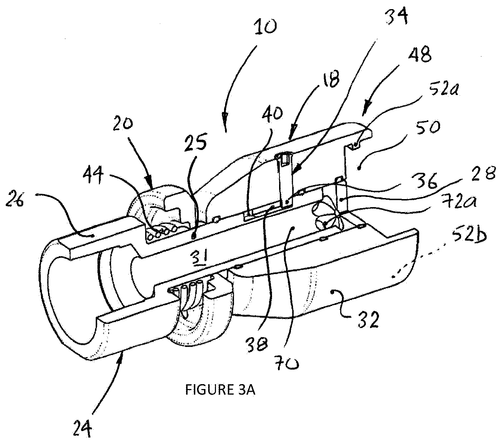

As best seen in figures 2A and 3A, the coupling arrangement 18 includes a coupling body 32 surrounding at least part of the plunger actuator 24. The coupling arrangement 18 also includes a key member 34 having an operative end 36 radially projecting inward of the coupling body 32. The key member 34 enables guided movement of the plunger actuator 24 between its open and closed positions. The operative end 36 of the key member 34 cooperates with an axially directed keyway 38 formed in a plunger member 25 of the plunger actuator 24. The plunger member is in the form of a tubular member 25 including a circumferential groove 40 formed continuous with the axially directed keyway 38. The circumferential groove 40 is arranged with the plunger actuator 24 in the open position for guided rotational movement of the plunger actuator 24 within the coupling body 32. This rotational movement of the plunger actuator 24 toward a retained position prevents axial movement of the plunger actuator 24 and thus retains the check valve 30 of the service port receiver 12 in the open position. In this example the circumferential groove 40 extends only partly around the tubular member 25 terminating in an abutment 42 for abutment with the operative end 36 of the key member 34. This means that with the plunger actuator 24 in the retained position and the locking actuator 20 engaged with the service port receiver 12 further rotation of the plunger actuator 24 is limited relative to said service port receiver 12.

The service tool 10 of this embodiment also comprises biasing means in the form of compression spring 44 operatively coupled to the locking actuator 20. The locking actuator 20 includes an elongated locking member 22 adapted for axial movement into and out of engagement with the service port receiver 12 during movement of said actuator 20 between its locked and unlocked positions. The compression spring 44 is located between the locking actuator 20 and an exposed end 26 of the plunger actuator 24 for axial biasing of the locking member 22 toward the locked position. In this example the service port receiver 12 includes a pair of opposing cavities in the form of blind holes 46a and 46b adapted for receipt of the locking member 22 with the locking actuator 20 in the engaged position. It is to be understood that the spring 44 acts against the plunger actuator 24 which is restricted from axial movement relative to the coupling arrangement 18 via interaction of the axially directed keyway 38 of the tubular member 25 and the key member 34 of the coupling arrangement 18.

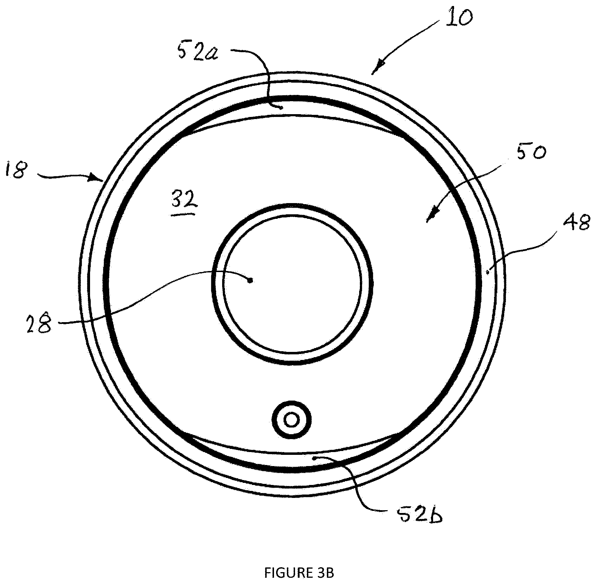

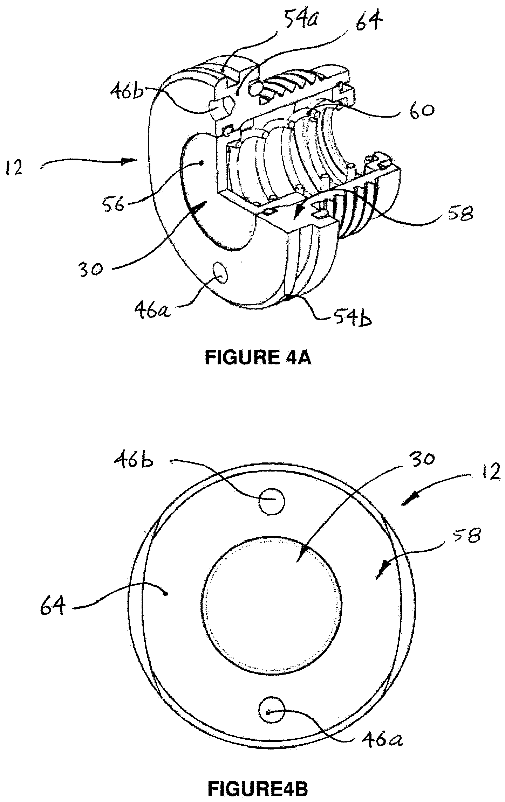

As seen in figures 3A/B and figures 4A/B the coupling arrangement 18 of the service tool 10 includes a coupling head 48. The coupling head 48 of this embodiment has an oval-shaped opening 50 formed partly by opposing and internally directed flanges 52a and 52b. The flanges such as 52a are adapted on part rotation of the coupling head 48 about the service port receiver 12 to interlock with a corresponding rebate 54a and 54b on said service port receiver 12. It will be understood that the coupling head 48 and the service port receiver 12 are configured wherein the releasable engagement of the locking member 22 with the service port receiver 12 occurs during the interlock of the coupling head 48 and said service port receiver 12.

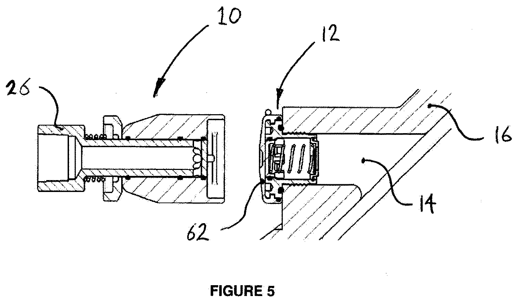

Figures 2B and 2C together with figures 4A/B and 5 illustrate the service port receiver 12 to which the service tool 10 of this embodiment is releasably coupled in a second aspect of the invention. The service port receiver 12 includes the check valve 30 which cooperates with the plunger actuator 24 of the service tool 10 for opening and closure of the check valve 30. The check valve 30 includes a reciprocating poppet 56 slidably housed within a check valve body 58 which in this example is a screw fitment to the service port 14. The poppet 56 is biased closed via valve spring 60 housed within the check valve body 58. The service port receiver 12 includes a cover or cap 62 arranged for releasable connection with an exposed head 64 of the valve body 58. The cap 62 is of a similar coupling configuration to the coupling head 48 of the coupling arrangement 18 wherein it includes a pair of inwardly directed flanges 66a and 66b. The flanges such as 66a are configured to cooperate with corresponding rebates such as 54a on the exposed head 64 of the service port receiver 12 to enable interlocking between the cap 62 and the service port receiver 12. The cap 62 protects the poppet 56 and other moving parts of the service port receiver 12 from the ingress of dust or other foreign particulate.

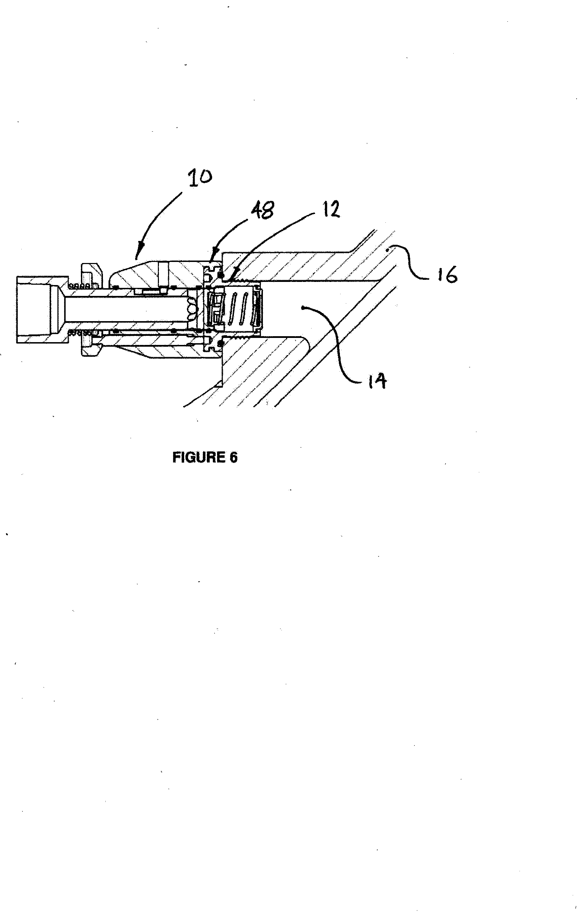

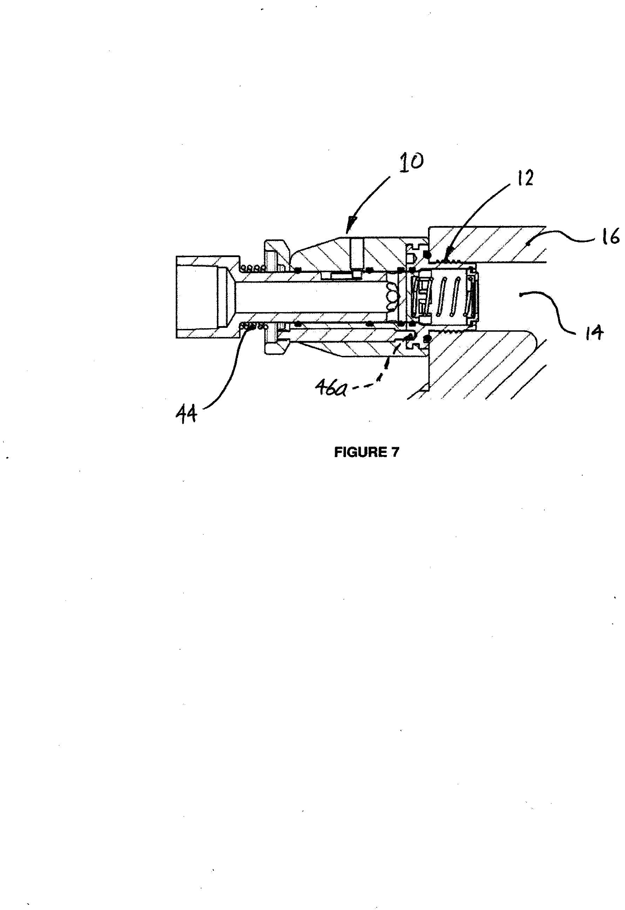

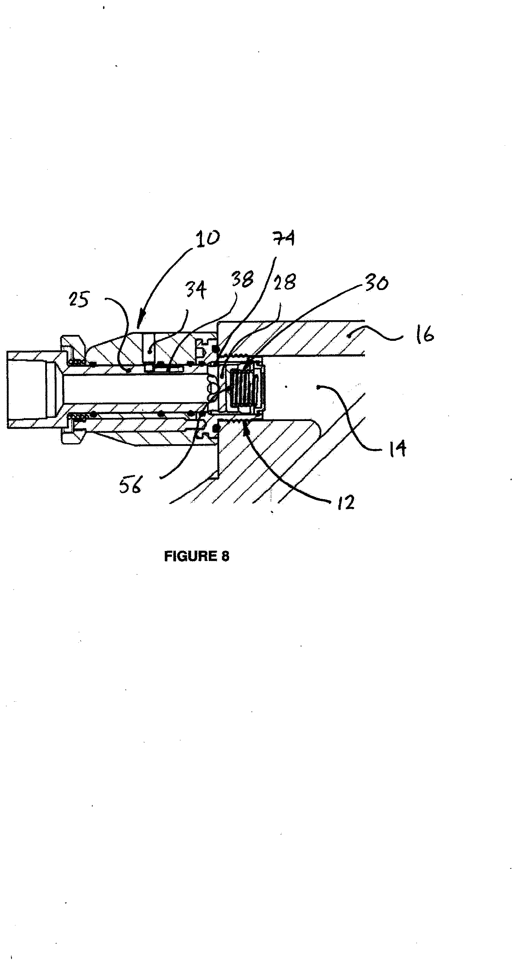

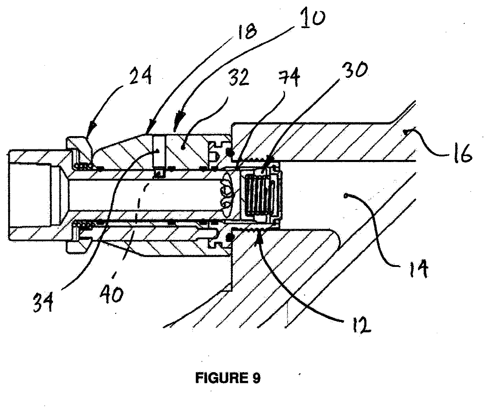

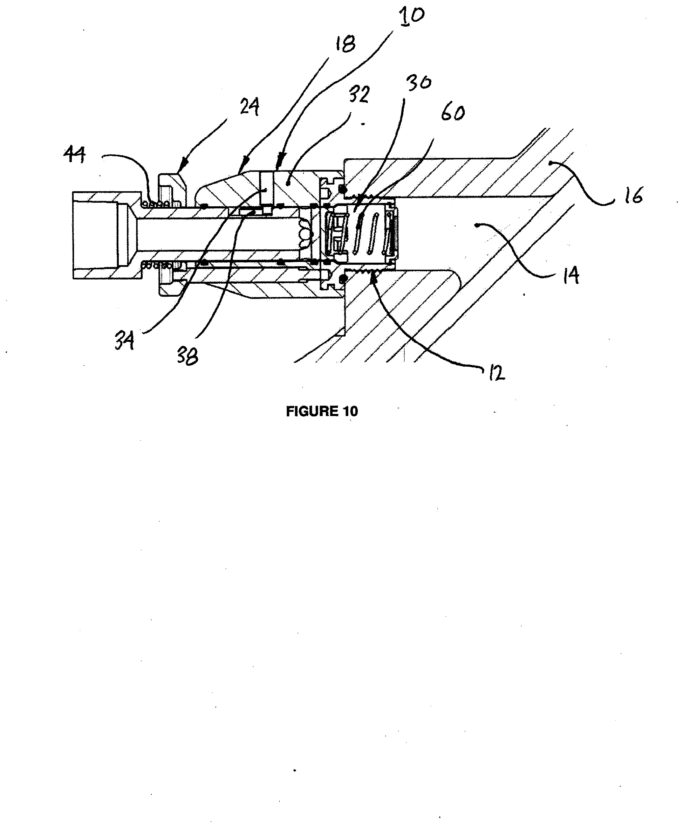

Figures 5 to 10 illustrate operation of the service tool 10 of the preferred embodiment in conjunction with the service port receiver 12 according to both aspects of the invention. Although not illustrated, it is to be understood that the service tool 10 is connected at its exposed end 26 to a fluid conduit for filling and/or evacuation of fluid such as engine oil from a gearbox (not shown) associated with the service port 14. In the context of the described embodiment of the invention, the service tool 10 cooperates with the service port receiver 12 as follows:
1. the service tool 10 is disengaged from the service port receiver 12 in preparation for releasable coupling to said service port receiver 12 which is protected via the detachable cap 62 (see figure 5);
2. the detachable cap 62 is removed from the service port receiver 12 and the service tool 10 aligned with the service port receiver 12 wherein the coupling arrangement 18 of the service tool 10 is rotated from its released position toward the engaged position enabling interlocking of the coupling head 48 with said service port receiver 12 (see figure 6);
3. the coupling arrangement 18 is further rotated about the service port receiver 12 whereupon the locking member 22 aligns with one of the cavities such as 46a of said service port receiver 12 and is urged under the influence of the compression spring 44 into the locked position preventing continued rotation of the coupling arrangement 18 (see figure 7);
4. the plunger actuator 24 of the service tool 10 is slidably and axially displaced inward whereupon a contact end 28 of the tubular member 25 contacts the poppet head 56 of the check valve 30 of the service port receiver 12 urging it toward an open position, noting that guided axial movement of the key member 34 along the axial channel 38 of the tubular member 25 limits this action to translational movement without rotation (see figure 8);
5. the plunger actuator 24 of the service tool 10 is with the check valve 30 of the service port receiver 12 in its open position rotated within the coupling body 32 of the coupling arrangement 18 being guided by interaction of the key member 34 and the circumferential groove 40 toward the retained position preventing axial movement of the plunger actuator 24 and thus retaining the check valve 30 of the service port receiver 12 in the open position (see figure 9);
6. the plunger actuator 24 is rotated within the coupling body 32 of the coupling arrangement 18 in a reverse direction whereupon axial movement of the plunger actuator 24 is permitted under the guided interaction between the key member 34 and the axially directed keyway 38 under the influence of the compression spring 44, noting that the poppet spring 60 within the check valve 30 automatically effects its closure (see figure 10).

In order to release the service tool 10 from the service port receiver 12 the locking actuator 20 is pulled rearward against the biasing force of the compression spring 44 in order to disengage the locking member 22 from the service port receiver 12 to permit rotation of the coupling arrangement 18. The locking actuator 20 is rotated to effect a corresponding rotation of the coupling arrangement 18 from its engaged position to the disengaged position for release from the service port receiver 12. Alternatively, the coupling arrangement 18 itself may be rotated for disengagement and release from the service port receiver 12.

It is to be understood that the service tool 10 enables opening and closure of the check valve 30 of the service port receiver 12 permitting fluid flow through the fluid pathway 31 between the gearbox and the fluid conduit (not shown). Returning to figure 1, the fluid pathway 31 is formed by an elongated passageway 70 formed within the tubular member 25 which at the contacting end 28 is blind and formed continuous with a series of radially-extending apertures such as 72a. In the open position the plunger actuator 24 exposes the radial apertures such as 72a of the tubular member 25 to an annular fluid passageway 74 formed within the check valve body 58 of the service port receiver 12. The annular passageway 74 thus completes the fluid pathway 31 between the gearbox and the fluid conduit.

Now that a preferred embodiment of the invention has been described it will be apparent to those skilled in the art that the service tool for coupling to a service port receiver has at least the following advantages:
1. the service tool can be used with a conventional fluid receiver or fluid conduit together with a relatively low profile service port receiver without the risk of damaging this or associated equipment during its normal operation;
2. the service tool provides a relatively clean solution to the removal and refilling of fluids typically hydrocarbons without the mess associated with regular practices;
3. in its application to wheel hubs of mining vehicles and other mobile equipment, the service tool avoids the need where in some instances the wheel is to be rotated during conventional oil change practices;
4. in its application to wheel hubs of mining vehicles and other mobile equipment, the service tool enables the removal of gear oil (typically in the final drive gearbox) without it running down the wheel hub and onto the tyre and then ground;
5. the service tool and service port receiver lend themselves to dry-break lube fluid transfer capability in fixed or mobile plant equipment where a typical fluid receiver was previously considered too large to be of practical or safe use;
6. the service tool is designed for use with industry threads commonly used for hydrocarbon liquids and for example connects with existing receivers enabling customers to utilise existing fluid coupling products.

Those skilled in the art will appreciate that the invention as described herein is susceptible to variations and modifications other than those specifically described, as defined by the scope of the appended claims.

## Claims

1. A service tool (10) adapted for connection to a fluid conduit and for coupling to a service port receiver (12) associated with a gearbox, said tool (10) comprising:
a coupling arrangement (18) adapted to releasably couple to the service port receiver (12), the coupling arrangement (18) configured for rotational movement about the service port receiver (12) between (a) a released position where the coupling arrangement (18) is released from the service port receiver (12) permitting axial movement of said coupling arrangement (18) relative to said service port receiver (12), and (b) an engaged position where the coupling arrangement (18) engages the service port receiver (12) preventing axial movement of said coupling arrangement (18) relative to said service port receiver (12),
a locking actuator (20) operatively coupled to the coupling arrangement (18) and arranged for movement between (i) a locked position where the locking actuator (20) releasably engages the service port receiver (12) preventing rotation of the coupling arrangement (18) thereby retaining it in the engaged position, and (ii) an unlocked position where the locking actuator (20) disengages the service port receiver (12) permitting rotation of the coupling arrangement (18) to the released position for its release from said service port receiver (12);
a plunger actuator (24) adapted for connection to the fluid conduit, said plunger actuator (24) being slidably coupled to the coupling arrangement (18) for movement between an open position and a closed position where in the open position, with the coupling arrangement (18) in the engaged position and the locking actuator (20) in the locked position, the plunger actuator (24) is adapted to contact a check valve (30) of the service port receiver (12) and open it thereby permitting fluid flow between the gearbox and the fluid conduit via a fluid pathway (31) formed at least in part by the plunger actuator (24);
the plunger actuator (24) including a plunger member (25) arranged for sliding movement within the coupling arrangement (18) between the open and closed positions, the plunger member (25) partly defining the fluid pathway (31);
the coupling arrangement (18) including a coupling body (32) surrounding at least part of the plunger actuator (24);
**characterised in that**:
said movement of the locking actuator (20) between the locked position and the unlocked position is axial movement; and
the coupling arrangement (18) includes a key member (34) having an operative end (36) radially projecting inward of the coupling body (32) for guided movement along an axially directed keyway (38) formed in the plunger member (25) of the plunger actuator (24) during movement of said plunger actuator (24) between its open and closed positions.

2. A service tool (10) as claimed in claim 1 wherein the locking actuator (20) includes an elongated locking member (22) adapted for axial movement into and out of engagement with a corresponding cavity of the service port receiver (12) during movement of the locking actuator (20) between the locked and unlocked positions, respectively.

3. A service tool (10) as claimed in claim 2 wherein the plunger member (25) of the plunger actuator (24) includes a circumferential groove (40) formed continuous with the axially directed keyway (38) and arranged with the plunger actuator (24) in the open position for guided rotational movement of the plunger actuator (24) within the coupling body (32) toward a retained position preventing axial movement of the plunger actuator (24) and thus retaining the check valve (30) of the service port receiver (12) in the open position.

4. A service tool (10) as claimed in claim 3 wherein the circumferential groove (40) extends only partly around the plunger member (25) and includes an abutment (42) for abutment with the operative end (36) of the key member (34) with the plunger actuator (24) in the retained position whereupon the locking member (22) of the locking actuator (20) being engaged with the service port receiver (12) limits further rotation of the plunger actuator (24) relative to said service port receiver (12).

5. A service tool (10) as claimed in any one of the claims 2 to 4 also comprising biasing means (44) operatively coupled to the locking actuator (20) for axial biasing of the locking member (22) toward the locked position.

6. A service tool (10) as claimed in claim 5, when dependent on either of claims 3 or 4, wherein the biasing means (44) includes a compression spring (44) located between the locking actuator (20) and the plunger actuator (24), said spring acting (44) against the plunger actuator (24) wherein axial movement of the plunger actuator (24) relative to the coupling arrangement (18) is permitted under the guided interaction between the key member (34) and the axially directed keyway (38) under the influence of the spring (44).

7. A service tool (10) as claimed in any one of the preceding claims wherein the plunger member (25) of the plunger actuator (24) is a tubular member of a blind configuration including a plurality of radially-directed fluid apertures at its blind end, said apertures being exposed on opening of the check valve (30) to permit said fluid flow via the fluid pathway (31).

8. A service tool (10) as claimed in any one of the preceding claims wherein the coupling arrangement (18) includes a coupling head (48) having an oval-shaped opening (50) formed partly by opposing and internally directed flanges (52a, 52b) adapted on part rotation of the coupling head (48) about the service port receiver (12) to interlock with a corresponding rebate (54a, 54b) on said service port receiver (12).

9. **In** combination a service tool (10) and service port receiver (12) comprising:
(1) a service port receiver (12) adapted for connection to a service port (14) associated with a gearbox;
(2) a service tool (10) adapted for connection to a fluid conduit, said tool (10) comprising:
a coupling arrangement (18) for releasable coupling with the service port receiver (12), said arrangement configured for rotational movement about the service port receiver (12) between (a) a released position where the coupling arrangement (18) is released from the service port receiver (12) permitting axial movement of said coupling arrangement (18) relative to said service port receiver (12), and (b) an engaged position where the coupling arrangement (18) engages the service port receiver (12) preventing axial movement of said coupling arrangement (18) relative to said service port receiver (12),
a locking actuator (20) operatively coupled to the coupling arrangement (18) and arranged for movement between (i) a locked position where the locking actuator (20) releasably engages the service port receiver (12) preventing rotation of the coupling arrangement (18) thereby retaining it in the engaged position, and (ii) an unlocked position where the locking actuator (20) disengages the service port receiver (12) permitting rotation of the coupling arrangement (18) to the released position for its release from said service port receiver (12);
a plunger actuator (24) adapted for connection to the fluid conduit, said plunger actuator (24) being slidably coupled to the coupling arrangement (18) for movement between an open position and a closed position where in the open position, with the coupling arrangement (18) in the engaged position and the locking actuator (20) in the locked position, the plunger actuator (24) is adapted to contact a check valve (30) of the service port receiver (12) and open it thereby permitting fluid flow between the gearbox and the fluid conduit via a fluid pathway (31) formed at least in part by the plunger actuator (24);
the plunger actuator (24) including a plunger member (25) arranged for sliding movement within the coupling arrangement (18) between the open and closed positions, the plunger member (25) partly defining the fluid pathway (31);
the coupling arrangement (18) including a coupling body (32) surrounding at least part of the plunger actuator (24);
**characterised in that**:
said movement of the locking actuator (20) between the locked position and the unlocked position is axial movement; and
the coupling arrangement (18) includes a key member (34) having an operative end (36) radially projecting inward of the coupling body (32) for guided movement along an axially directed keyway (38) formed in the plunger member (25) of the plunger actuator (24) during movement of said plunger actuator (24) between its open and closed positions.

## Patentansprüche

1. Servicewerkzeug (10), das zur Verbindung mit einer Fluidleitung und zum Koppeln mit einem einem Getriebe zugeordneten Serviceanschlussempfänger (12) geeignet ist, das Werkzeug (10) umfassend:
eine Kupplungsanordnung (18), die geeignet ist, lösbar mit dem Serviceanschlussempfänger (12) zu koppeln, wobei die Kupplungsanordnung (18) für eine Drehbewegung um den Serviceanschlussempfänger (12) zwischen (a) einer gelösten Position, in der die Kupplungsanordnung (18) von dem Serviceanschlussempfänger (12) gelöst ist und eine axiale Bewegung der Kupplungsanordnung (18) relativ zu dem Serviceanschlussempfänger (12) zulässt, und (b) einer Eingriffsposition, in der die Kupplungsanordnung (18) in den Serviceanschlussempfänger (12) eingreift und eine axiale Bewegung der Kupplungsanordnung (18) relativ zu dem Serviceanschlussempfänger (12) verhindert, konfiguriert ist,
einen Verriegelungsaktuator (20), der betriebsmäßig mit der Kupplungsanordnung (18) gekoppelt und für eine Bewegung zwischen (i) einer verriegelten Position, in der der Verriegelungsaktuator (20) lösbar in den Serviceanschlussempfänger (12) eingreift und dadurch eine Drehung der Kupplungsanordnung (18) verhindert, wodurch sie in der Eingriffsposition gehalten wird, und (ii) einer entriegelten Position, in der der Verriegelungsaktuator (20) den Serviceanschlussempfänger (12) löst und eine Drehung der Kupplungsanordnung (18) in die gelöste Position für ihre Freigabe von dem Serviceanschlussempfänger (12) ermöglicht, eingerichtet ist;
einen Kolbenaktuator (24), der zur Verbindung mit der Fluidleitung geeignet ist, wobei der Kolbenaktuator (24) verschiebbar mit der Kupplungsanordnung (18) gekoppelt ist, um sich zwischen einer offenen Position und einer geschlossenen Position zu bewegen, wobei sich in der offenen Position die Kupplungsanordnung (18) in der Eingriffsposition und der Aktuator (20) in der verriegelten Position befindet, der Kolbenaktuator (24) geeignet ist, ein Rückschlagventil (30) des Serviceanschlussempfängers (12) zu berühren und es zu öffnen, wodurch ein Fluidfluss zwischen dem Getriebe und der Fluidleitung über einen Fluidweg (31) ermöglicht wird, der mindestens teilweise durch den Kolbenaktuator (24) gebildet wird;
der Kolbenaktuator (24) ein Kolbenelement (25) einschließt, das für eine gleitende Bewegung innerhalb der Kupplungsanordnung (18) zwischen der offenen und der geschlossenen Position angeordnet ist, wobei das Kolbenelement (25) teilweise den Fluidpfad (31) definiert;
die Kupplungsanordnung (18) einen Kupplungskörper (32) einschließt, der mindestens einen Teil des Kolbenaktuators (24) umgibt;
**dadurch gekennzeichnet, dass**:
die Bewegung des Verriegelungsaktuators (20) zwischen der verriegelten Position und der entriegelten Position eine axiale Bewegung ist; und
die Kupplungsanordnung (18) ein Schlüsselelement (34) mit einem wirksamen Ende (36) aufweist, das radial nach innen aus dem Kupplungskörper (32) herausragt, um eine geführte Bewegung entlang einer axial gerichteten Keilnut (38) zu ermöglichen, die in dem Kolbenelement (25) des Kolbenaktuators (24) während der Bewegung des Kolbenaktuators (24) zwischen seiner offenen und geschlossenen Position gebildet ist.

2. Servicewerkzeug (10) nach Anspruch 1, wobei der Verriegelungsaktor (20) ein längliches Verriegelungselement (22) einschließt, das während der Bewegung des Verriegelungsaktuators (20) zwischen der verriegelten und der entriegelten Position axial in einen entsprechenden Hohlraum des Serviceanschlussempfängers (12) eingreifen und diesen wieder verlassen kann.

3. Servicewerkzeug (10) nach Anspruch 2, wobei das Kolbenelement (25) des Kolbenaktuators (24) eine Umfangsnut (40) einschließt, die durchgehend mit der axial ausgerichteten Keilnut (38) gebildet ist und mit dem Kolbenaktuator (24) in der offenen Position für eine geführte Drehbewegung des Kolbenaktuators (24) innerhalb des Kupplungskörpers (32) in Richtung einer zurückgehaltenen Position angeordnet ist, die eine axiale Bewegung des Kolbenaktuators (24) verhindert und somit das Rückschlagventil (30) des Serviceanschlussempfängers (12) in der offenen Position zurückhält.

4. Servicewerkzeug (10) nach Anspruch 3, wobei sich die Verriegelungsrille (40) nur teilweise um das Kolbenelement (25) herum erstreckt und einen Anschlag (42) zur Anlage an das wirksame Ende (36) des Schlüsselelements (34) einschließt, wenn sich der Kolbenaktuator (24) in der festgehaltenen Position befindet, woraufhin das Verriegelungselement (22) des Verriegelungsaktuators (20), das in den Serviceanschlussempfänger (12) eingreift, die weitere Drehung des Kolbenaktuators (24) relativ zu diesem Serviceanschlussempfänger (12) begrenzt.

5. Servicewerkzeug (10) nach einem der Ansprüche 2 bis 4, umfassend auch Vorspannmittel (44), die betriebsmäßig mit dem Verriegelungsaktuator (20) gekoppelt sind, um das Verriegelungselement (22) in Richtung der verriegelten Position axial vorzuspannen.

6. Servicewerkzeug (10) nach Anspruch 5, wenn es von einem der Ansprüche 3 oder 4 abhängt, wobei das Vorspannmittel (44) eine Druckfeder (44) einschließt, die zwischen dem Verriegelungsaktuator (20) und dem Kolbenaktuator (24) angeordnet ist, wobei die Feder (44) gegen den Kolbenaktuator (24) wirkt, wobei eine axiale Bewegung des Kolbenaktuators (24) relativ zu der Kupplungsanordnung (18) unter der geführten Interaktion zwischen dem Schlüsselelement (34) und der axial gerichteten Keilnut (38) unter dem Einfluss der Feder (44) ermöglicht wird.

7. Servicewerkzeug (10) nach einem der vorstehenden Ansprüche, wobei das Kolbenelement (25) des Kolbenaktuators (24) ein rohrförmiges Element mit einer Blindkonfiguration ist, das an seinem blinden Ende eine Vielzahl von radial gerichteten Fluidöffnungen einschließt, wobei die Öffnungen beim Öffnen des Rückschlagventils (30) freigelegt werden, um den Fluidfluss über den Fluidweg (31) zu ermöglichen.

8. Servicewerkzeug (10) nach einem der vorstehenden Ansprüche, wobei die Kupplungsanordnung (18) einen Kupplungskopf (48) mit einer ovalen Öffnung (50) aufweist, die teilweise durch gegenüberliegende und nach innen gerichtete Flansche (52a, 52b) gebildet wird, die bei einer Teildrehung des Kupplungskopfes (48) um den Serviceanschlussempfänger (12) mit einem entsprechenden Falz (54a, 54b) an dem Serviceanschlussempfänger (12) ineinandergreifen können.

9. Kombination aus einem Servicewerkzeug (10) und einem Serviceanschlussempfänger (12), umfassend:
(1) einen Serviceanschlussempfänger (12), der zur Verbindung mit einem Serviceanschluss (14) eines Getriebes geeignet ist;
(2) ein Servicewerkzeug (10), das zur Verbindung mit einer Fluidleitung geeignet ist, das Werkzeug (10) umfassend:
eine Kupplungsanordnung (18) zum lösbaren Kuppeln mit dem Serviceanschlussempfänger (12), wobei die Anordnung für eine Drehbewegung um den Serviceanschlussempfänger (12) zwischen (a) einer gelösten Position, in der die Kupplungsanordnung (18) von dem Serviceanschlussempfänger (12) gelöst ist und eine axiale Bewegung der Kupplungsanordnung (18) relativ zu dem Serviceanschlussempfänger (12) zulässt, und (b) einer Eingriffsposition, in der die Kupplungsanordnung (18) in den Serviceanschlussempfänger (12) eingreift und eine axiale Bewegung der Kupplungsanordnung (18) relativ zu dem Serviceanschlussempfänger (12) verhindert, ausgebildet ist,
einen Verriegelungsaktuator (20), der betriebsmäßig mit der Kupplungsanordnung (18) gekoppelt und für eine Bewegung zwischen (i) einer verriegelten Position, in der der Verriegelungsaktuator (20) lösbar in den Serviceanschlussempfänger (12) eingreift und dadurch eine Drehung der Kupplungsanordnung (18) verhindert, wodurch sie in der Eingriffsposition gehalten wird, und (ii) einer entriegelten Position, in der der Verriegelungsaktuator (20) den Serviceanschlussempfänger (12) löst und eine Drehung der Kupplungsanordnung (18) in die gelöste Position für ihre Freigabe von dem Serviceanschlussempfänger (12) ermöglicht, eingerichtet ist;
einen Kolbenaktuator (24), der zur Verbindung mit der Fluidleitung geeignet ist, wobei der Kolbenaktuator (24) verschiebbar mit der Kupplungsanordnung (18) gekoppelt ist, um sich zwischen einer offenen Position und einer geschlossenen Position zu bewegen, wobei sich in der offenen Position die Kupplungsanordnung (18) in der Eingriffsposition und der Aktuator (20) in der verriegelten Position befindet, der Kolbenaktuator (24) geeignet ist, ein Rückschlagventil (30) des Serviceanschlussempfängers (12) zu berühren und es zu öffnen, wodurch ein Fluidfluss zwischen dem Getriebe und der Fluidleitung über einen Fluidweg (31) ermöglicht wird, der mindestens teilweise durch den Kolbenaktuator (24) gebildet wird;
der Kolbenaktuator (24) ein Kolbenelement (25) einschließt, das für eine gleitende Bewegung innerhalb der Kupplungsanordnung (18) zwischen der offenen und der geschlossenen Position angeordnet ist, wobei das Kolbenelement (25) teilweise den Fluidpfad (31) definiert;
die Kupplungsanordnung (18) einen Kupplungskörper (32) einschließt, der mindestens einen Teil des Kolbenaktuators (24) umgibt;
**dadurch gekennzeichnet, dass:**
die Bewegung des Verriegelungsaktuators (20) zwischen der verriegelten Position und der entriegelten Position eine axiale Bewegung ist; und
die Kupplungsanordnung (18) ein Schlüsselelement (34) mit einem wirksamen Ende (36) aufweist, das radial nach innen aus dem Kupplungskörper (32) herausragt, um eine geführte Bewegung entlang einer axial gerichteten Keilnut (38) zu ermöglichen, die in dem Kolbenelement (25) des Kolbenaktuators (24) während der Bewegung des Kolbenaktuators (24) zwischen seiner offenen und geschlossenen Position gebildet ist.

## Revendications

1. Outil d'entretien (10) conçu pour se raccorder à un conduit de fluides et pour être accouplé à un récepteur d'orifice d'entretien (12) associé à une boîte de vitesses, ledit outil (10) comprenant :
un dispositif d'accouplement (18) conçu pour s'accoupler de manière amovible au récepteur d'orifice d'entretien (12), le dispositif d'accouplement (18) étant conçu pour un mouvement de rotation autour du récepteur d'orifice d'entretien (12) entre (a) une position libérée où le dispositif d'accouplement (18) est libéré du récepteur d'orifice d'entretien (12) permettant un mouvement axial dudit dispositif d'accouplement (18) par rapport audit récepteur d'orifice d'entretien (12), et (b) une position en prise où le dispositif d'accouplement (18) entre en prise dans le récepteur d'orifice d'entretien (12) empêchant le mouvement axial dudit dispositif d'accouplement (18) par rapport audit récepteur d'orifice d'entretien (12),
un actionneur de verrouillage (20) accouplé de manière fonctionnelle au dispositif d'accouplement (18) et agencé pour se déplacer entre (i) une position verrouillée dans laquelle l'actionneur de verrouillage (20) entre en prise de manière libérable dans le récepteur d'orifice d'entretien (12), empêchant la rotation du dispositif d'accouplement (18) et le maintenant ainsi dans la position en prise, et (ii) une position déverrouillée dans laquelle l'actionneur de verrouillage (20) désolidarise le récepteur d'orifice d'entretien (12), permettant la rotation du dispositif d'accouplement (18) dans la position libérée pour le libérer dudit récepteur d'orifice d'entretien (12) ;
un actionneur de piston (24) conçu pour être raccordé au conduit de fluides, ledit actionneur de piston (24) étant accouplé de manière coulissante au dispositif d'accouplement (18) pour se déplacer entre une position ouverte et une position fermée où, dans la position ouverte, avec le dispositif d'accouplement (18) dans la position en prise et l'actionneur de verrouillage (20) dans la position verrouillée, l'actionneur de piston (24) est conçu pour entrer en contact avec un clapet anti-retour (30) du récepteur d'orifice d'entretien (12) et l'ouvrir, permettant ainsi l'écoulement de fluide entre la boîte de vitesses et le conduit de fluides par l'intermédiaire d'un passage de fluide (31) formé au moins en partie par l'actionneur de piston (24) ;
l'actionneur de piston (24) comportant un élément de piston (25) servant à coulisser à l'intérieur du dispositif d'accouplement (18) entre les positions ouverte et fermée, l'élément de piston (25) définissant en partie le passage de fluide (31) ;
le dispositif d'accouplement (18) comportant un corps d'accouplement (32) entourant au moins une partie de l'actionneur de piston (24) ;
**caractérisé en ce que** :
ledit mouvement de l'actionneur de verrouillage (20) entre la position verrouillée et la position déverrouillée est un mouvement axial ; et
le dispositif d'accouplement (18) comporte un élément de clavette (34) dont une extrémité fonctionnelle (36) fait radialement saillie vers l'intérieur du corps d'accouplement (32) pour un mouvement guidé le long d'une rainure de clavette (38) dirigée de manière axiale et formée dans l'élément de piston (25) de l'actionneur de piston (24) pendant le mouvement dudit actionneur de piston (24) entre sa position ouverte et sa position fermée.

2. Outil d'entretien (10) selon la revendication 1, dans lequel l'actionneur de verrouillage (20) comporte un élément de verrouillage allongé (22) conçu pour se déplacer de manière axiale afin d'entrer en prise dans une cavité correspondante du récepteur de l'orifice d'entretien (12) et de se désolidariser de celle-ci pendant le mouvement de l'actionneur de verrouillage (20) entre les positions verrouillée et déverrouillée, respectivement.

3. Outil d'entretien (10) selon la revendication 2, dans lequel l'élément de piston (25) de l'actionneur de piston (24) comporte une rainure circonférentielle (40) formée de manière continue avec la rainure de clavette (38) orientée de manière axiale et agencée avec l'actionneur de piston (24) en position ouverte pour guider le mouvement de rotation de l'actionneur de piston (24) dans le corps d'accouplement (32) vers une position retenue empêchant le mouvement axial de l'actionneur de piston (24) et retenant ainsi le clapet anti-retour (30) du récepteur d'orifice d'entretien (12) en position ouverte.

4. Outil d'entretien (10) selon la revendication 3, dans lequel la rainure circonférentielle (40) ne s'étend que partiellement autour de l'élément de piston (25) et comporte une butée (42) destinée à venir en butée avec l'extrémité fonctionnelle (36) de l'élément de clavette (34) avec l'actionneur de piston (24) dans la position retenue, après quoi l'élément de verrouillage (22) de l'actionneur de verrouillage (20) étant en prise avec le récepteur d'orifice d'entretien (12) limite la rotation supplémentaire de l'actionneur de piston (24) par rapport audit récepteur d'orifice d'entretien (12).

5. Outil d'entretien (10) selon l'une quelconque des revendications 2 à 4, comprenant également un moyen de sollicitation (44) accouplés de manière fonctionnelle à l'actionneur de verrouillage (20) pour solliciter de manière axiale l'élément de verrouillage (22) vers la position verrouillée.

6. Outil de service (10) selon la revendication 5, lorsqu'il dépend de l'une ou l'autre des revendications 3 ou 4, dans lequel le moyen de sollicitation (44) comporte un ressort de compression (44) situé entre l'actionneur de verrouillage (20) et l'actionneur de piston (24), ledit ressort agissant (44) contre l'actionneur de piston (24) dans lequel le mouvement axial de l'actionneur de piston (24) par rapport au dispositif d'accouplement (18) est autorisé par l'interaction guidée entre l'élément de clavette (34) et la rainure de clavette orientée de manière axiale (38) sous l'influence du ressort (44).

7. Outil d'entretien (10) selon l'une quelconque des revendications précédentes, dans lequel l'élément de piston (25) de l'actionneur de piston (24) est un élément tubulaire d'une configuration aveugle comportant une pluralité d'ouvertures de fluide orientées radialement à son extrémité aveugle, lesdites ouvertures étant exposées lors de l'ouverture du clapet anti-retour (30) pour permettre ledit écoulement de fluide par l'intermédiaire du passage de fluide (31).

8. Outil d'entretien (10) selon l'une quelconque des revendications précédentes, dans lequel le dispositif d'accouplement (18) comporte une tête d'accouplement (48) présentant une ouverture de forme ovale (50) formée en partie par des brides opposées et orientées intérieurement (52a, 52b) adaptées à la rotation partielle de la tête d'accouplement (48) autour du récepteur d'orifice d'entretien (12) pour s'emboîter avec une feuillure correspondante (54a, 54b) sur ledit récepteur d'orifice d'entretien (12).

9. Combinaison d'un outil d'entretien (10) et d'un récepteur d'orifice d'entretien (12) comprenant :
(1) un récepteur d'orifice d'entretien (12) conçu pour être raccordé à un orifice d'entretien (14) associé à une boîte de vitesses ;
(2) un outil d'entretien (10) conçu pour être raccordé à un conduit de fluides, ledit outil (10) comprenant :
un dispositif d'accouplement (18) pour un accouplement libérable avec le récepteur d'orifice d'accouplement (12), ledit dispositif conçu pour un mouvement de rotation autour du récepteur d'orifice (12) entre (a) une position libérée où le dispositif d'accouplement (18) est libéré du récepteur d'orifice d'entretien (12) permettant un mouvement axial dudit dispositif d'accouplement (18) par rapport audit récepteur d'orifice d'entretien (12), et (b) une position en prise où le dispositif d'accouplement (18) entre en prise dans le récepteur d'orifice d'entretien (12), empêchant tout mouvement axial dudit dispositif d'accouplement (18) par rapport audit récepteur d'orifice d'entretien (12),
un actionneur de verrouillage (20) accouplé de manière fonctionnelle au dispositif d'accouplement (18) et conçu pour se déplacer entre (i) une position verrouillée dans laquelle l'actionneur de verrouillage (20) entre en prise de manière libérable dans le récepteur d'orifice d'entretien (12), empêchant la rotation du dispositif d'accouplement (18) et le maintenant ainsi dans la position en prise, et (ii) une position déverrouillée dans laquelle l'actionneur de verrouillage (20) désolidarise le récepteur d'orifice d'entretien (12), permettant la rotation du dispositif d'accouplement (18) dans la position libérée pour le libérer dudit récepteur d'orifice d'entretien (12) ;
un actionneur de piston (24) conçu pour être raccordé au conduit de fluides, ledit actionneur de piston (24) étant accouplé de manière coulissante au dispositif d'accouplement (18) pour se déplacer entre une position ouverte et une position fermée où, dans la position ouverte, avec le dispositif d'accouplement (18) dans la position en prise et l'actionneur de verrouillage (20) dans la position verrouillée, l'actionneur de piston (24) est conçu pour entrer en contact avec un clapet anti-retour (30) du récepteur d'orifice d'entretien (12) et l'ouvrir, permettant ainsi l'écoulement de fluide entre la boîte de vitesses et le conduit de fluides par l'intermédiaire d'un chemin de fluide (31) formé au moins en partie par l'actionneur de piston (24) ;
l'actionneur de piston (24) comportant un élément de piston (25) servant à coulisser à l'intérieur du dispositif d'accouplement (18) entre les positions ouverte et fermée, l'élément de piston (25) définissant en partie le passage de fluide (31) ;
le dispositif d'accouplement (18) comportant un corps d'accouplement (32) entourant au moins une partie de l'actionneur de piston (24) ;
**caractérisé en ce que** :
ledit mouvement de l'actionneur de verrouillage (20) entre la position verrouillée et la position déverrouillée est un mouvement axial ; et
le dispositif d'accouplement (18) comporte un élément de clavette (34) présentant une extrémité fonctionnelle (36) faisant saillie radialement vers l'intérieur du corps d'accouplement (32) pour un mouvement guidé le long d'une rainure de clavette (38) orientée de manière axiale et formée dans l'élément de piston (25) de l'actionneur de piston (24) pendant le mouvement dudit actionneur de piston (24) entre ses positions ouverte et fermée.
